(19) **Europäisches Patentamt / European Patent Office / Office européen des brevets**

(11) **EP 3 594 643 B1**

(12) **FASCICULE DE BREVET EUROPEEN**

(45) Date de publication et mention
de la délivrance du brevet:
**19.02.2025 Bulletin 2025/08**

(21) Numéro de dépôt: **19184038.8**

(22) Date de dépôt: **03.07.2019**

(51) Classification Internationale des Brevets (IPC):
**G01J 5/20** *(2006.01)* **G01J 5/00** *(2022.01)*

(52) Classification Coopérative des Brevets (CPC):
**G01J 5/20; G01J 5/80**

(54) **METHODE DE TRAITEMENT D'UNE IMAGE**

VERARBEITUNGSVERFAHREN EINES BILDES

METHOD FOR PROCESSING AN IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.07.2018 FR 1856355**

(43) Date de publication de la demande:
**15.01.2020 Bulletin 2020/03**

(73) Titulaire: **Schneider Electric Industries SAS
92500 Rueil Malmaison (FR)**

(72) Inventeur: **CHIESI, Laurent
38050 GRENOBLE Cedex 09 (FR)**

(74) Mandataire: **Brevalex
Tour Trinity
1 B Place de la Défense
92400 Courbevoie (FR)**

(56) Documents cités:
**WO-A2-01/84118      US-A1- 2007 120 058**

**Description**

## DOMAINE TECHNIQUE

La présente invention concerne une méthode de traitement d'une image brute collectée par un détecteur pourvu d'une matrice de bolomètres. En particulier, la méthode de traitement selon la présente invention est destinée à corriger les non-uniformités dues aux dispersions des caractéristiques des bolomètres du détecteur.

La présente invention concerne également un programme d'ordinateur susceptible de mettre en oeuvre toutes les étapes du procédé selon la présente invention.

L'invention concerne enfin un détecteur comprenant des bolomètres et un calculateur mettant en oeuvre le programme d'ordinateur.

## ÉTAT DE LA TECHNIQUE ANTÉRIEURE

Un détecteur infrarouge connu de l'état de la technique comprend en général des bolomètres organisés de manière matricielle selon n lignes et m colonnes.

Lorsqu'ils sont exposés à une scène en vue d'une acquisition d'une image, ces bolomètres, sensibles à la température de la scène, voient leur résistance électrique varier. En d'autres termes, le courant circulant dans chacun des bolomètres est dépendant de la température de la scène, mais également de la température ambiante.

En particulier, la mesure $S\_(i,j)$ des bolomètres $Pix\_(i,j)$ d'une matrice de bolomètres évolue selon la loi suivante :

$$S_P(i,j) = Resp(T_{amb})(T_{scène} - T_{amb}) + S_{0,T_{amb}}$$

Où :

- $T_{amb}$ est la température ambiante, et plus particulièrement la température de l'imageur ;
- $T_{scène}$ est la température de la scène vue par le bolomètre,
- $Resp(T_{amb})$ est la responsivité du bolomètre, cette dernière dépend de la température ambiante ;
- $S_{0,Tamb}$ est la valeur de sortie du bolomètre du bolomètre pour une température de scène égale à la température ambiante.

Le terme $Resp(T_{amb})$ dépend des matériaux utilisés pour la conception du bolomètre ainsi que de l'architecture de ce dernier.

La déduction de la température de scène impose de connaître la température ambiante $T_{amb}$, de sorte que le détecteur est en général également pourvu d'un capteur de température.

Le détecteur peut être également pourvu de bolomètres additionnels, dits bolomètres aveugles, et non exposés à la scène. Le courant circulant dans ces derniers ne dépend alors que de la température ambiante.

Ainsi, selon une telle configuration, la détermination de la variation de résistance d'un bolomètre exposé est basée sur une mesure différentielle entre les courants circulant dans ledit bolomètre exposé et un bolomètre aveugle.

En général, chaque colonne de la matrice de bolomètres est associée à un bolomètre aveugle qui est mis en oeuvre pour chacun des bolomètres de ladite colonne lors de la mesure différentielle. Toutefois, d'autres configurations peuvent être envisagées, et notamment la mise en commun d'un unique bolomètre aveugle pour plusieurs colonnes de bolomètres.

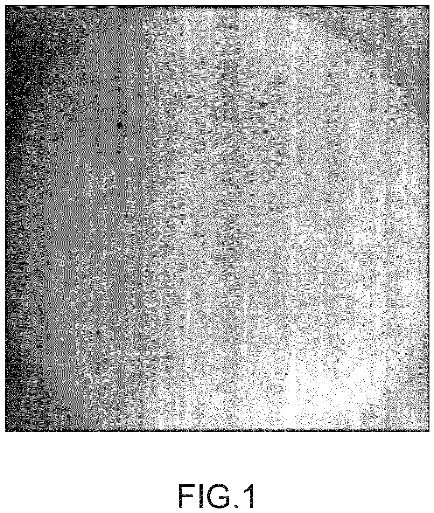

L'image brute (figure 1) d'une scène susceptible d'être obtenue avec un tel dispositif n'est en général pas exploitable, et nécessite un traitement additionnel.

En particulier, l'image illustrée à la figure 1 révèle le positionnement des bolomètres du détecteur, et plus particulièrement une non-uniformité (« effet de pixelisation »). Cet effet trouve son origine dans la dispersion importante des résistances électriques d'un bolomètre à l'autre.

L'image présente également un aspect colonnaire qui est dû à la dispersion des résistances électriques entre les bolomètres aveugles.

Afin de pallier ces problèmes, différentes solutions ont pu être envisagées, dont certaines sont décrites dans les documents US20070120058 et WO0184118.

Il a pu, notamment, être proposé de mettre en oeuvre un obturateur mécanique sur le détecteur. En particulier, l'obturateur mécanique est placé devant le détecteur de manière à collecter une image de référence relative à la température ambiante, qui est par la suite soustraite à l'image de la scène.

Cet agencement, relativement simple sur son principe, n'est toutefois pas satisfaisant.

En effet, la mise en oeuvre d'un obturateur, et la motorisation qui lui est associée, posent à la fois des problèmes de coûts et d'encombrement.

Par ailleurs, l'image de référence doit être rafraîchie dès lors que la température ambiante varie.

De manière alternative, il a été proposé de caractériser la réponse en température du détecteur, et notamment de chacun de ses bolomètres.

Cette caractérisation comporte des mesures de référence à différentes températures avec l'ensemble des bolomètres du détecteur obturés avec un obturateur.

Les mesures de références permettent alors de déterminer l'évolution en température de chacun des bolomètres et ainsi construire des tables de calibration conservées dans un espace mémoire du détecteur.

Ainsi, en fonctionnement, le détecteur corrige l'image brute par soustraction, pour chaque bolomètre, des valeurs obtenues par interpolation à partir des tables de calibration.

Cette solution, qui permet de réduire l'effet de non uniformité de l'image d'un bolomètre à l'autre, n'est toutefois pas satisfaisante.

En effet, la procédure d'acquisition des mesures de référence est longue, et génère un surcoût de fabrication du détecteur.

Par ailleurs, l'espace mémoire dédié à la sauvegarde des tables de calibration, du fait du coût qui lui est associé, n'est pas souhaitable.

Enfin, une troisième méthode basée sur des algorithmes permettant de corriger la non-uniformité de l'image a été proposée dans les documents [1] et [2] cités à la fin de la description.

Ces méthodes connues de l'état de la technique ne sont pas non plus satisfaisantes.

En effet, ces méthodes sont généralement fastidieuses à mettre en oeuvre, et leur robustesse est discutable.

Par ailleurs, ces méthodes nécessitent la mise en oeuvre de moyens de calculs lourds qui pénalisent d'autant le coût des détecteurs dans lesquelles elles sont mises en oeuvre.

Un but de la présente invention est de proposer une méthode de traitement d'image collectée par un détecteur pourvu de bolomètres plus simple que les techniques connues de l'état de la technique, et ne nécessitant pas la mise en oeuvre de pièces mécaniques ainsi que la robotisation qui leur est associée.

Un autre but de l'invention est de proposer une méthode permettant de corriger l'effet colonnaire observé sur une image brute.

## EXPOSÉ DE L'INVENTION

Les buts de la présente invention sont, au moins en partie, atteints par une méthode de traitement telle que définie dans la revendication 1.

Selon un mode de mise en oeuvre, le détecteur comprend un espace mémoire dédié à la sauvegarde des composantes calibrées S_mask_cal_(i,j).

Selon un mode de mise en oeuvre, les composantes calibrées S_cal_(i,j) sont sauvegardées dans un espace mémoire du détecteur.

Selon un mode de mise en oeuvre, la méthode comprend en outre les étapes suivantes :

d) un calcul, pour chacune des colonnes, d'un terme colonne Col_mask_(j) correspondant à la valeur moyenne des mesures S_(i,j) des bolomètres masqués de la colonne considérée ;
e) une corrélation entre les termes colonne Col_mask_(j) et des coordonnées calibrées C_mask_cal_(j) des bolomètres masqués déterminées selon la relation :

$$C\_mask\_cal\_(j) = \frac{1}{n}\sum_{k=1}^{n} S\_mask\_ref\_(k,j) \ ;$$

f) une correction additionnelle de l'image corrigée pour former une image finale, la correction additionnelle comprenant

le calcul de mesures finales S_fin_(i,j) de l'image finale à partir des mesures corrigées S_Cor_(i,j) et sur la base du résultat de l'étape e) de corrélation.

Selon un mode de mise en oeuvre, l'étape e) de corrélation comprend une régression linéaire de sorte que les termes colonne Col_mask_(j) et les coordonnées calibrées C_mask_cal_(j) vérifient la relation suivante :

$$Col\_mask\_(j) = \alpha \ . \ C\_mask\_cal\_(j) + Col_{offset}$$

où $\alpha$ et $Col_{offset}$ sont les termes déterminés lors de la régression linéaire.

Selon un mode de mise en oeuvre, l'étape f) de correction additionnelle comprend le calcul des mesures finales S_fin_(i,j) pour chaque bolomètre selon la relation suivante :

$$S\_fin\_(i,j) = S\_Cor\_(i,j) - \alpha . Col\_\ cal\_(j) - Col_{offset}$$

où, pour un bolomètre (Pix_ (i,j)) d'une colonne donnée, Col_cal_(i,j) est une coordonnée calibrée déterminée selon la relation

$$Col\_cal\_(j) = \frac{1}{n}\sum_{k=1}^{n} S\_ref\_(k,j).$$

Selon un mode de mise en oeuvre, le détecteur est pourvu d'une lentille montée sur un diaphragme qui obture des bolomètres masqués au niveau des coins du détecteur.

Selon un mode de mise en oeuvre, le détecteur comprend également des bolomètres aveugles, chaque bolomètre aveugle étant mis en oeuvre pour la mesure différentielle des bolomètres d'au moins une colonne de bolomètres qui lui est propre, avantageusement chaque bolomètre aveugle est associé à une seule colonne de bolomètres.

L'invention concerne également un programme d'ordinateur, qui lorsqu'il est exécuté par un ordinateur, conduisent à mettre en oeuvre le procédé selon la présente invention.

L'invention concerne également un dispositif comprenant :

- un détecteur pourvu d'une pluralité de bolomètres agencés de manière matricielle selon n lignes et m colonnes, la pluralité de bolomètres comprenant des bolomètres exposés à la scène, et des bolomètres masqués obturés,
- un calculateur doté du programme d'ordinateur selon la présente invention.

L'invention concerne également la mise en oeuvre du dispositif selon la présente invention pour la détection, notamment la détection de personne, dans une pièce.

## BRÈVE DESCRIPTION DES DESSINS

D'autres caractéristiques et avantages apparaîtront dans la description qui va suivre d'une méthode de traitement d'une image, donnés à titre d'exemples non limitatifs, en référence aux dessins annexés dans lesquels :

- la figure 1 est une image brute d'une scène obtenue par un détecteur pourvu de bolomètres agencés selon une matrice de 80 lignes par 80 colonnes ;
- la figure 2 est une représentation schématique d'un détecteur pourvu d'une lentille montée sur un diaphragme susceptible d'être mis en oeuvre selon la présente invention ;
- la figure 3 est une image de référence collectée par le détecteur obturé par un obturateur maintenu avec le détecteur à une température de référence ;
- la figure 4 est une représentation des composantes d'un vecteur, dit vecteur de référence colonne calculé à partir de l'image de référence de la figure 3 ;
- la figure 5 est une représentation des composantes d'une matrice, dite matrice de référence colonne, déterminée à partir de l'image de référence de la figure 3 et du vecteur de la figure 4 ;
- la figure 6 est une représentation des composantes d'un vecteur, dit vecteur de référence masqué calculé à partir de l'image de référence de la figure 3 ;
- la figure 7 est une représentation des composantes d'une matrice, dite matrice de référence masqué, déterminée à partir de l'image de référence de la figure 3 et du vecteur de la figure 6 ;
- la figure 8 est une représentation graphique des valeurs des termes masqués S_mask_norm_(i,j) (sur l'axe vertical) en fonction des composantes calibrées masquées S_masque_cal_(i,j) (axe horizontal) ;
- les figures 9a et 9b sont des images, respectivement, brute et corrigée en uniformité selon la présente invention ;
- la figure 10 est une représentation graphique des valeurs du terme masqué C_mask_norm_(i,j) (sur l'axe vertical) en fonction de la composante calibrée masquée C_mask_cal_(i,j) ;
- la figure 11 représente une image finale ;
- la figure 12 illustre une correction de l'aspect colonnaire uniquement de l'image brute de la figure 9a.

## EXPOSÉ DÉTAILLÉ DE MODES DE RÉALISATION PARTICULIERS

La présente invention va maintenant être décrite en relation avec les figures 1 à 11.

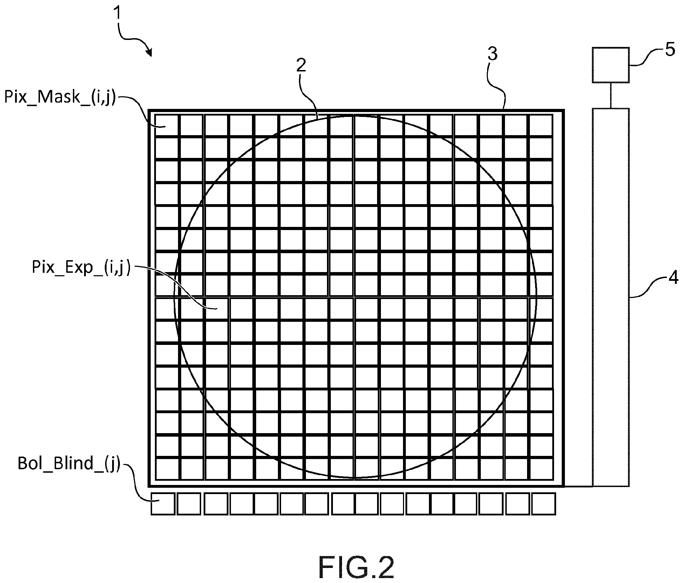

La figure 2 représente un détecteur pourvu d'une pluralité de bolomètres, notés Pix_(i,j), agencés de manière matricielle selon n lignes (notées « $L_i$ ») et m colonnes (notées « $C_j$ »).

Un bolomètre indicé i, j correspond à un bolomètre disposé à l'intersection de la ligne i avec la colonne j.

Parmi les bolomètres Pix_(i,j), on peut distinguer les bolomètres, dit exposés Pix_Exp_(i,j), exposés à la scène destinée à être imagée et les bolomètres, dit bolomètres masqués Pix_mask_(i,j), qui sont obturés.

Les bolomètres masqués Pix_mask_(i,j) sont par exemple obturés par le diaphragme sur lequel est montée une lentille 2 disposée entre la scène et le détecteur 1. Les bolomètres masqués Pix_mask_(i,j) sont, selon cette configuration, disposés dans les coins du détecteur. L'invention n'est toutefois pas limitée à cet agencement, et les bolomètres masqués Pix_mask_(i,j) peuvent par exemple former des colonnes de bolomètres complètes, en particulier les colonnes bordant la matrice de bolomètres.

En d'autres termes, les bolomètres masqués sont obturés lors de l'acquisition d'une image.

Le détecteur de la figure 2 peut également comprendre une pluralité de bolomètres aveugles Bol_Blind_(j).

Le détecteur 1 comprend en outre un calculateur 4 doté d'un processeur de calcul destiné à exécuter les différentes étapes du procédé selon la présente invention. Le calculateur peut également comprendre un espace mémoire pour sauvegarder des mesures brutes, de référence, ou intermédiaires.

Enfin, le détecteur 1 peut comprendre une sonde de température 5 destinée à évaluer la température de l'environnement dans lequel se trouve ledit détecteur. La sonde de température peut, par exemple, comprendre une jonction PN.

Le procédé selon la présente invention propose de corriger les défauts d'une image brute collectée par le détecteur 1.

À cet égard la figure 1, discutée dans la section « ETAT DE LA TECHNIQUE ANTERIEURE », présente des défauts d'uniformité et un aspect colonnaire.

La non-uniformité est essentiellement due à une dispersion des résistances électriques des bolomètres formant le détecteur.

Des zones plus sombres peuvent également être observées au niveau des coins de l'image. Ces zones sombres sont le fait de l'obturation des bolomètres masqués Pix_mask_(i,j) par le diaphragme sur lequel est montée la lentille, et seront mises à profit pour la correction des non-uniformités observées sur l'image brute. La mesure brute S_(i,j) d'un bolomètre masqué Pix_mask_(i,j) est notée dans la suite de l'énoncé mesure brute masqué S_M_(i,j).

Une zone centrale plus claire, correspondant aux mesure brutes S_(i,j) (notée mesure brute exposé S_E_(i,j)) de bolomètres exposés Pix_Exp_(i,j), peut être observée.

Enfin, la figure 1 révèle également un aspect colonnaire qui est dû à la dispersion des résistances électriques des bolomètres aveugles Bol_Blind_(j). Chaque bolomètre aveugle Bol_Blind_(j) est, à cet égard, mis en oeuvre pour la mesure différentielle des bolomètres d'au moins une colonne de bolomètres qui lui est propre, avantageusement chaque bolomètre aveugle Bol_Blind_(j) est associé à une seule colonne $C_j$ de bolomètres Pix_(i,j).

Notons que si toutes les colonnes étaient associées au même bolomètre aveugle, l'effet colonnaire ne serait pas observé. Toutefois cette configuration n'est pas souhaitable dans la mesure où une défaillance de cet unique bolomètre aveugle rendrait le détecteur non fonctionnel dans son entièreté.

Le procédé selon la présente invention comprend la détermination de la réponse S_(i,j), notée S_ref_(i,j), des bolomètres Pix_(i,j) lorsqu'ils sont obturés par un obturateur maintenu avec le détecteur à une température, dite température de référence Tr, par exemple à 20°C.

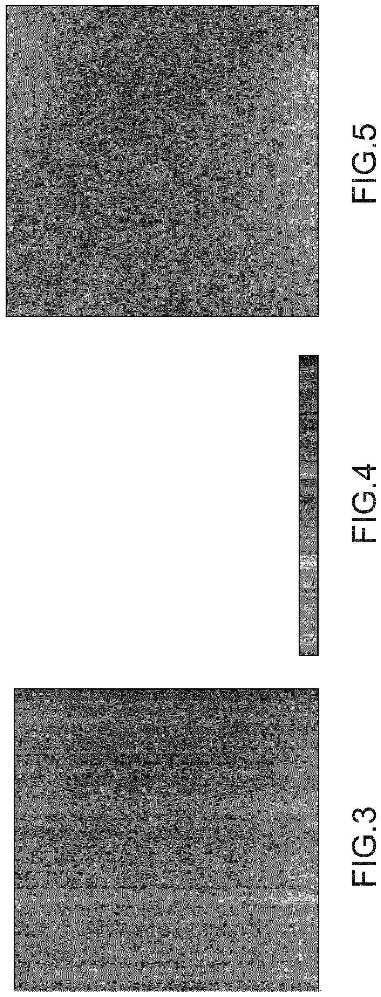

Les réponses S_Ref_(i,j) peuvent être obtenues par une simple mesure par le détecteur avec un obturateur placé devant les bolomètres Pix_(i,j). A cet égard, la figure 3 représente une image de référence collectée par le détecteur.

Sur la base des ces mesures de référence, un vecteur, dit vecteur de référence colonne V_ref col (représenté à la figure 4) de composantes C_ref col (j) (pour j allant de 1 à m) est déterminé.

Les composantes C_ref col_(j) sont déterminées par la relation suivante :

$$C\_ref\_col\_(j) = \frac{1}{n} \sum_{i=1}^{n} S\_Ref\_(i,j)$$

En d'autres termes, chaque composante C_ref col_(j) est la moyenne des mesures de référence S_Ref_(i,j) de la colonne j.

Une matrice, dite matrice de référence colonne M_Pix_col_cal (représentée à la figure 5), de composantes calibrées S_col_cal_(i,j) associées chacune à un bolomètre Pix_(i,j), peut également être déterminée.

Les composantes S_col_cal_(i,j), pour chacun des bolomètres Pix_(i,j) de la colonne j, sont alors calculées de la manière suivante :

$$S\_col\_cal\_(i,j) = S\_ref\_(i,j) - C\_ref\_col\_(j)$$

En d'autres termes, la composante calibrée S_col_cal_(i,j) d'un bolomètre Pix_(i,j) d'une colonne j du détecteur, correspond à la mesure de référence dudit bolomètre à laquelle on soustraie la moyenne des mesures de références S_ref_(i,j) de l'ensemble des bolomètre de la colonne j.

La matrice de calibration colonnaire M_Pix_col_cal, tel que décrit dans la suite de l'énoncé, est avantageusement mise en oeuvre pour corriger l'aspect colonnaire des images brutes collectées par le détecteur.

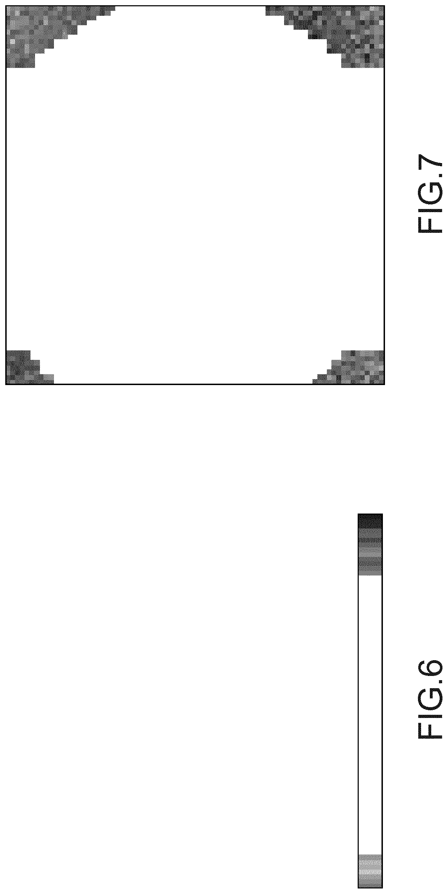

De manière complémentaire ou alternative, toujours sur la base des mesures de référence S_ref_(i,j), un vecteur, dit vecteur de référence masqué V_ref_pix (représenté à la figure 6), de composantes C_mask_cal_(j), peut être déterminé.

Les composantes C_mask_cal_(j) sont déterminées par la relation suivante :

$$C\_mask\_cal\_(j) = \frac{1}{n}\sum_{i=1}^{n} S\_mask\_ref\_(i,j)$$

Où les données S_mask_ref_(i,j) correspondent aux réponses S_Ref_(i,j) des bolomètres masqués Pix_mask_(i,j) uniquement.

En d'autres termes, chaque composante C_mask_cal_(j) est la moyenne des mesures de référence S_Ref_(i,j) associées aux bolomètres masqués de la colonne j.

Une matrice, dite matrice de référence masque M_Pix_mask_cal (représentée à la figure 7), de composantes S_mask_cal_(i,j) chacun associée à un bolomètre masqué Pix_mask_(i,j) peut également être déterminée.

La composante calibrée S_mask_cal_(i,j), pour chacun des bolomètres masqués Pix_mask_(i,j) de la colonne j, est déterminée selon :

$$S\_mask\_cal\_(i,j) = S\_mask\_ref\_(i,j) - C\_mask\_cal\_(j)$$

En d'autres termes, la composante calibrée S_mask_cal_(i,j) d'un bolomètre Pix_mask_(i,j) d'une colonne j du détecteur, correspond à la mesure de référence dudit bolomètre à laquelle on soustraie la moyenne des mesures de références de l'ensemble des bolomètres masqués de la colonne j.

L'établissement des matrices de calibration masquée M_Pix_mask_cal et colonnaire M_Pix_col_cal est mis en oeuvre lors de la fabrication du détecteur, et leurs composantes sont avantageusement sauvegardées dans un espace mémoire dédié du détecteur, par exemple dans l'espace mémoire du calculateur 4.

Le procédé selon la présente invention comprend une étape a) de calcul de termes, dits termes masqués S_mask_norm_(i,j) d'une matrice, dite matrice masquée.

En particulier, chaque terme masqué S_mask_norm_(i,j) est associé à un bolomètre masqué Pix_mask_(i,j).

La détermination du terme masqué S_mask_norm_(i,j) relatif à un bolomètre masqué Pix_mask_(i,j) de la colonne Cj, comprend la soustraction de la moyenne des mesures brutes masquées de la colonne Cj (noté S_M_(j)) à la mesure brute masquée S_M_(i,j).

En particulier, chaque terme masqué S_mask_norm_(i,j) de la colonne j est déterminé selon les relations suivantes :

$$S\_M\_(j) = \frac{1}{n}\sum_{k=1}^{n} S\_M\_(k,j)$$

$$S\_mask\_norm\_(i,j) = S\_M\_(i,j) - S\_M\_(j)$$

L'étape de détermination des termes masqués S_mask_norm_(i,j) est suivie d'une étape b) de corrélation entre lesdits termes masquées S_mask_norm_(i,j) et les composantes calibrées masquées S_mask_cal_(i,j) des bolomètres masqués Pix-mask_(i,j).

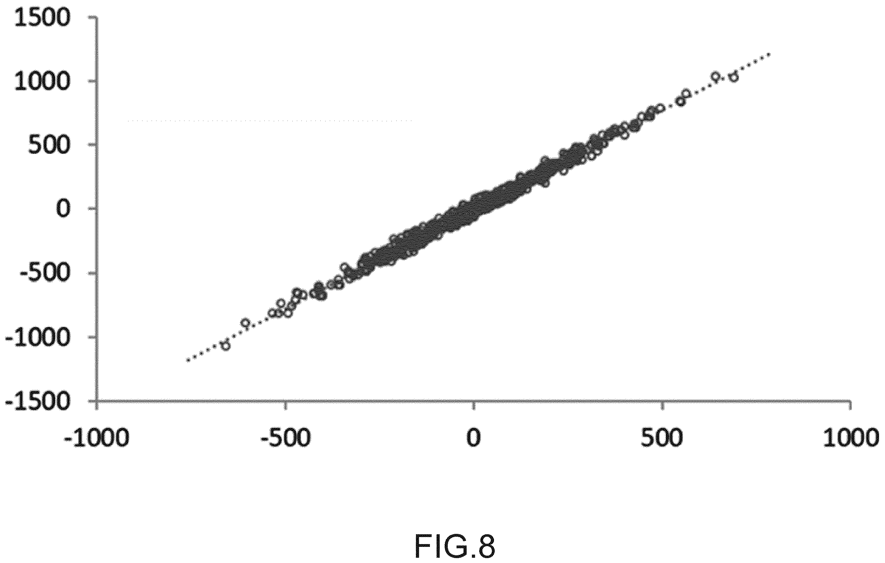

La figure 8 représente en particulier pour chaque bolomètre masqué Pix-masque_(i,j), la valeur des termes masqués S_mask_norm_(i,j) (sur l'axe vertical) en fonction des composantes calibrées masquées S_mask_cal_(i,j). Sur cette figure, le terme masqué S_mask_norm_(i,j) varie linéairement en fonction de la composante calibrée masquée S_mask_cal_(i,j).

La corrélation entre ces deux termes comprend alors une régression linéaire selon la relation :

$$S\_mask\_norm\_(i,j) = \beta . S\_mask\_cal\_(i,j) + D_{offset}$$

où $\beta$ et $D_{offset}$ sont les termes déterminés lors de la régression linéaire.

Ces derniers permettent alors de corriger, lors d'une étape de correction c), les mesures brutes S_(i,j) de chaque bolomètre selon la relation :

$$S\_Cor\_(i,j) = S\_(i,j) - \beta . S\_col\_cal\_(i,j) - D_{offset}$$

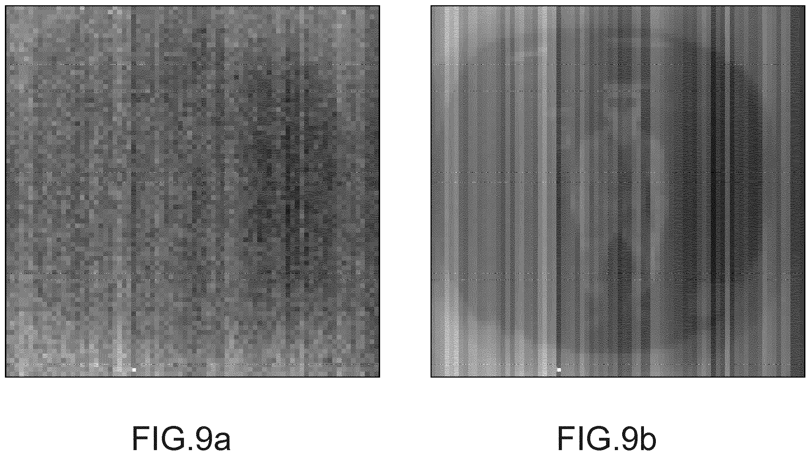

Les figures 9a et 9b représentent l'effet de la correction décrite ci-avant. En particulier, la figure 9a est une image brute, tandis que la figure 9b illustre l'effet d'une correction de non-uniformité de l'image. Si l'aspect colonnaire apparait toujours sur la figure 9b, cette dernière laisse entrevoir un personnage jusqu'alors non détectable sur l'image brute.

La méthode selon la présente invention peut également mettre en oeuvre une correction de l'aspect colonnaire. Ce dernier peut être exécuté de manière indépendante à la correction d'uniformité présentée ci-avant.

La méthode selon la présente invention peut comprendre en outre, lors d'une étape d), un calcul, pour chacune des colonnes Cj, d'un terme colonne Col_mask_(j) correspondant à la valeur moyenne des mesures S_(i,j) des bolomètres masqués Pix_mask_(i,j) de la colonne considérée.

Ces termes colonnes Col_mask_(j) peuvent alors être corrélés, lors d'une étape e), aux coordonnées calibrées C_mask_cal_(j) des bolomètres masqués Pix_mask_(i,j).

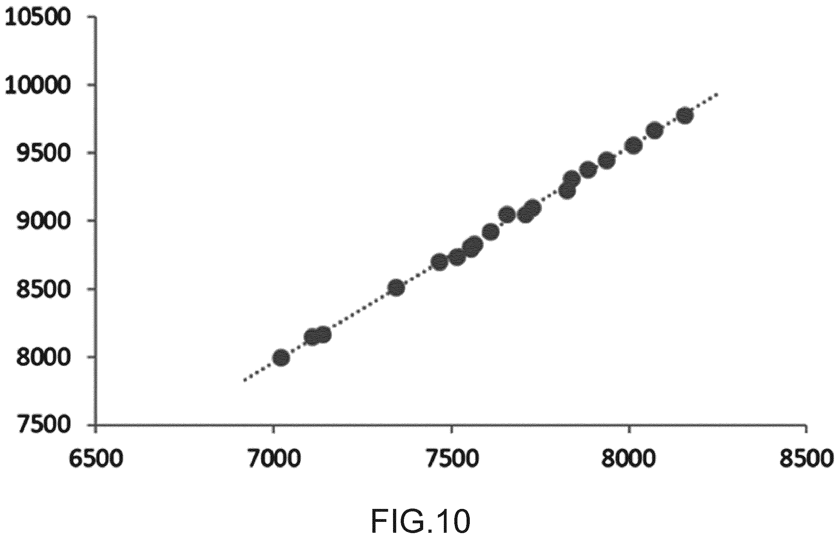

La figure 10 représente en particulier pour chaque bolomètre masqué Pix_mask_(i,j), la valeur des termes colonnes Col_mask_(j) (sur l'axe vertical) en fonction des coordonnées calibrées C_mask_cal_(j) des bolomètres masqués Pix_mask_(i,j) de la colonne j. Sur cette figure, le terme Col_mask_(j) varie linéairement en fonction de la coordonnée calibrée C_mask_cal_(j).

La corrélation peut comprendre une régression linéaire de sorte que les termes colonne Col_mask_(j) et les coordonnées calibrées C_mask_cal_(j) vérifient la relation suivante :

$$Col\_mask\_(j) = \alpha . C\_mask\_cal\_(j) + Col_{offset}$$

où $\alpha$ et $Col_{offset}$ sont les termes déterminés lors de la régression linéaire.

Le procédé selon la présente invention peut alors comprendre une correction additionnelle (étape f) de l'image corrigée pour former une image finale.

La correction additionnelle comprend notamment le calcul de mesures finales S_fin_(i,j) de l'image finale à partir des mesures corrigées S_Cor_(i,j) et sur la base du résultat de l'étape de corrélation.

Par exemple, la correction additionnelle comprend le calcul des mesures finales S_fin_(i,j) pour chaque bolomètre Pix_(i,j) selon la relation suivante :

$$S\_fin\_(i,j) = S\_Cor\_(i,j) - \alpha . Col\_cal\_(j) - Col_{offset}$$

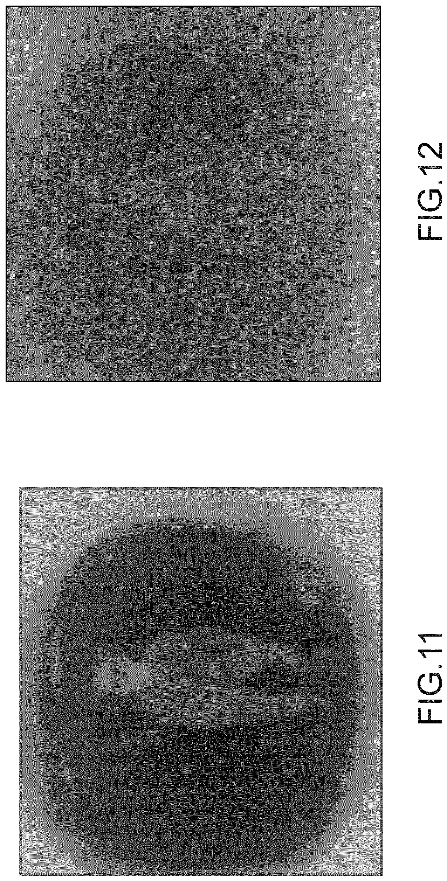

L'image ainsi corrigée présentée à la figure 11 ne présente plus l'aspect colonnaire.

Il est entendu que les aspects colonnaire et de non uniformité de l'image brute ont des origines distinctes et peuvent par conséquent être corrigés de manière indépendante.

En particulier, l'ordre de mise en oeuvre de ces corrections peut être inversé.

A cet égard, la figure 12 illustre une correction de l'aspect colonnaire uniquement de l'image brute de la figure 9a.

L'invention concerne également un programme d'ordinateur, qui lorsqu'il est exécuté par un ordinateur ou un calculateur, conduit à mettre en oeuvre le procédé selon la présente invention.

La présente invention permet de corriger de manière différentiée les aspects colonnaire et de non-uniformité des images brutes des détecteurs pourvu d'une matrice de bolomètres.

En particulier, la présente invention ne requiert qu'une mesure de référence à une température de référence afin de corriger les images brutes.

La présente invention peut avantageusement être mise en oeuvre pour la détection, et notamment la détection de personnes, dans des pièces.

**RÉFÉRENCES**

[1] EP2940991B1
[2] US2010237245A1

**Revendications**

1. Méthode de traitement, exécutée par un calculateur, d'une image brute, **caractérisée par** des mesures brutes S_(i,j) collectées par des bolomètres Pix_(i,j) d'un détecteur (1) agencés de manière matricielle selon n lignes ($L_i$) et m colonnes ($C_j$), les bolomètres Pix_(i,j) comprenant des bolomètres exposés (Pix_exp_(i,j)) et des bolomètres masqués (Pix_mask_(i,j)), obturés lors de l'acquisition des mesures brutes, la méthode comprenant :

   a) un calcul de termes masqués S_mask_norm_(i,j), associés aux bolomètres masqués (Pix_mask_(i,j)), le calcul consistant à retrancher à la mesure brute S_(i,j) de chaque bolomètre masqué (Pix_mask_(i,j)) d'une colonne donnée ($C_j$), la valeur moyenne des mesures brutes S_(i,j) des bolomètres masqués de ladite colonne ;
   b) une corrélation entre les termes masqués S_mask_norm_(i,j) et des composantes calibrées S_mask_cal_(i,j) des bolomètres masqués (Pix_mask_(i,j)) déterminées selon la relation :

   $$S\_mask\_cal\_(i,j) = S\_mask\_ref\_(i,j) - \frac{1}{n}\sum_{k=1}^{n} S\_mask\_ref\_(k,j)$$

   les termes S_mask_ref_(i,j) étant des mesures de référence des bolomètres masqués (Pix_mask_(i,j)) obtenues à une température de référence (Tr) et en masquant le détecteur avec un masque également maintenu à la température de référence (Tr), l'étape de corrélation comprenant une régression linéaire de sorte que chaque terme masqué S_mask_norm_(i,j) et les composantes calibrées S_mask_cal_(i,j) vérifient la relation suivante :

   $$S\_mask\_norm\_(i,j) = \beta \cdot S\_mask\_cal\_(i,j) + D_{offset}$$

   où $\beta$ et $D_{offset}$ sont les termes déterminés lors de la régression linéaire ;
   c) une étape de correction de l'image brute qui comprend le calcul de mesures corrigées S_Cor_(i,j) d'une image corrigée pour chaque bolomètre (Pix_(i,j) sur la base du résultat de l'étape b) de corrélation, cette étape de correction comprenant le calcul des mesures corrigées S_Cor_(i,j) pour chaque bolomètre (Pix_(i,j)) selon la relation suivante :

   $$S\_Cor\_(i,j) = S\_(i,j) - \beta \cdot S\_\,cal\_(i,j) - D_{offset}$$

   où, pour un bolomètre (Pix_ (i,j)) donné, S_cal_(i,j) est une composante calibrée déterminée selon la relation

   $$S\_cal\_(i,j) = S\_ref\_(i,j) - \frac{1}{n}\sum_{k=1}^{n} S\_ref\_(k,j)$$

   les termes S_ref_(i,j) étant des mesures de référence des bolomètres (Pix_(i,j)) à une température de référence (Tr) et en masquant le détecteur avec un masque également maintenu à la température de référence (Tr).

2. Méthode selon la revendication 1, dans laquelle le détecteur comprend un espace mémoire dédié à la sauvegarde des composantes calibrées S_mask_cal_(i,j).

3. Méthode selon l'une des revendications 1 ou 2, dans laquelle les composantes calibrées S_cal_(i,j) sont sauvegardées dans un espace mémoire du détecteur.

4. Méthode selon l'une des revendications 1 à 3, dans laquelle la méthode comprend en outre les étapes suivantes :

   d) un calcul, pour chacune des colonnes (Cj), d'un terme colonne Col_mask_(j) correspondant à la valeur moyenne des mesures S_(i,j) des bolomètres masqués Pix_mask_(i,j) de la colonne considérée ;

e) une corrélation entre les termes colonne Col_mask_(j) et des coordonnées calibrées C_mask_cal_(j) des bolomètres masqués (Pix_mask_(i,j)) déterminées selon la relation :

$$C\_mask\_cal\_(j) = \frac{1}{n}\sum_{k=1}^{n} S\_mask\_ref\_(k,j) \ ;$$

f) une correction additionnelle de l'image corrigée pour former une image finale, la correction additionnelle comprenant le calcul de mesures finales S_fin_(i,j) de l'image finale à partir des mesures corrigées S_Cor_(i,j) et sur la base du résultat de l'étape e) de corrélation.

5. Méthode selon la revendication 4, dans laquelle l'étape e) de corrélation comprend une régression linéaire de sorte que les termes colonne Col_mask_(j) et les coordonnées calibrées C_mask_cal_(j) vérifient la relation suivante :

$$\text{Col\_mask\_(j)} = \alpha \ . \ \text{C\_mask\_cal\_(j)} + \text{Col}_{\text{offset}}$$

où a et $\text{Col}_{\text{offset}}$ sont les termes déterminés lors de la régression linéaire.

6. Méthode selon la revendication 5, dans laquelle l'étape f) de correction additionnelle comprend le calcul des mesures finales S_fin_(i,j) pour chaque bolomètre (Pix_(i,j)) selon la relation suivante :

$$\text{S\_fin\_(i,j)} = \text{S\_Cor\_(i,j)} - \alpha \ . \ \text{Col\_ cal\_(j)} - \text{Col}_{\text{offset}}$$

où, pour un bolomètre (Pix_ (i,j)) d'une colonne donnée (Cj), Col_cal_(i,j) est une coordonnée calibrée déterminée selon la relation

$$Col\_cal\_(j) = \frac{1}{n}\sum_{k=1}^{n} S\_ref\_(k,j).$$

7. Méthode selon l'une des revendications 1 à 6, dans laquelle le détecteur est pourvu d'une lentille montée sur un diaphragme qui obture des bolomètres masqués (Pix_mask_(i,j)) au niveau des coins du détecteur (1).

8. Méthode selon l'une des revendications 1 à 7, dans laquelle le détecteur comprend également des bolomètres aveugles (Bol_Blind_(j)), chaque bolomètre aveugle (Bol_Blind_(j)) étant mis en oeuvre pour une mesure différentielle des bolomètres d'au moins une colonne de bolomètres qui lui est propre, avantageusement chaque bolomètre aveugle (Bol_Blind_(j)) est associé à une seule colonne ($C_j$) de bolomètres (Pix_(i,j)).

9. Programme d'ordinateur, qui lorsqu'il est exécuté par un ordinateur,conduit à mettre en oeuvre le procédé selon l'une des revendications 1 à 7.

10. Dispositif comprenant :

- un détecteur pourvu d'une pluralité de bolomètre agencés de manière matricielle selon n lignes ($L_i$) et m colonnes ($C_j$), la pluralité de bolomètres comprenant des bolomètres exposés (Pix_exp_(i,j)) à la scène, et des bolomètres masqués (Pix_mask_(i,j)) obturés,
- un calculateur doté du programme d'ordinateur selon la revendication 9.

11. Mise en oeuvre du dispositif selon la revendication 10 pour la détection, notamment la détection de personne, dans une pièce.


**Patentansprüche**

1. Von einem Rechner ausgeführtes Verfahren zum Verarbeiten eines Rohbilds, das durch Rohmessungen S_(i,j) gekennzeichnet ist, die von Bolometern Pix_(i,j) eines Detektors (1) gesammelt werden, die matrixförmig in n Zeilen ($L_i$) und m Spalten ($C_j$) angeordnet sind, wobei die Bolometer Pix_(i,j) freiliegende Bolometer (Pix_exp_(i,j)) und maskierte Bolometer (Pix_mask_(i,j)) umfassen, die beim Erfassen der Rohmesswerte verdeckt sind, wobei das Verfahren Folgendes umfasst:

a) Berechnen maskierter Terme S_mask_norm_(i,j), die den maskierten Bolometern (Pix_mask_(i,j)) zugeordnet sind, wobei das Berechnen darin besteht, von der Rohmessung S_(i,j) jedes maskierten Bolometers (Pix_mask_(i, j)) einer gegebenen Spalte ($C_j$) den Mittelwert der Rohmessungen S_(i,j) der maskierten Bolometer der Spalte abzuziehen;

b) Korrelieren zwischen den maskierten Termen S_mask_norm_(i,j) und kalibrierten Komponenten S_mask_cal_(i,j) der maskierten Bolometer (Pix_mask_(i,j)), die gemäß der folgenden Beziehung bestimmt werden:

$$S\_mask\_cal\_(i,j) = S\_mask\_ref\_(i,j) \; - \frac{1}{n}\sum_{k=1}^{n} S\_mask\_ref\_(k,j)$$

wobei die Terme S_mask_ref_(i,j) maskierte Bolometer-Referenzmessungen (Pix_mask_(i,j)) sind, die bei einer Referenztemperatur (Tr) und durch Maskieren des Detektors mit einer Maske, die ebenfalls auf der Referenztemperatur (Tr) gehalten wird, erhalten werden, wobei der Schritt des Korrelierens eine lineare Regression umfasst, so dass jeder maskierter Term S_mask_norm_(i,j) und die kalibrierten Komponenten S_mask cal_(i,j) die folgende Beziehung erfüllen:

$$\text{S\_mask\_norm\_(i,j)} = \beta \cdot \text{S\_mask\_cal\_(I,j)} + D_{offset}$$

wobei $\beta$ und $D_{offset}$ die während der linearen Regression bestimmten Terme sind;

c) einen Schritt des Korrigierens des Rohbilds, der das Berechnen korrigierter Messungen S_Cor_(i,j) eines korrigierten Bilds für jedes Bolometer (Pix_(i,j) auf Basis des Ergebnisses des Schritts b) des Korrelierens umfasst, wobei der Schritt des Korrigierens das Berechnen korrigierter Messungen S_Cor_(i,j) für jedes Bolometer (Pix_(i,j)) gemäß der folgenden Beziehung umfasst:

$$\text{S\_Cor\_(i,j)} = \text{S\_(i,j)} - \beta \cdot \text{S\_cal\_(i,j)} - D_{offset}$$

wobei S_cal_(i,j) für ein gegebenes Bolometer (Pix_(i,j)) eine kalibrierte Komponente ist, die gemäß der folgenden Beziehung bestimmt wird:

$$S\_cal\_(i,j) = S\_ref\_(i,j) \; - \frac{1}{n}\sum_{k=1}^{n} S\_ref\_(k,j)$$

wobei die Terme S_ref_(i,j) Referenzmessungen der Bolometer (Pix_(i,j)) bei einer Referenztemperatur (Tr) und durch Maskieren des Detektors mit einer Maske sind, die ebenfalls auf der Referenztemperatur (Tr) gehalten wird.

**2.** Verfahren nach Anspruch 1, wobei der Detektor eine Speicherkapazität umfasst, die dazu ausgelegt ist, die kalibrierten Komponenten S_mask_cal(i,j) zu speichern.

**3.** Verfahren nach einem der Ansprüche 1 oder 2, wobei die kalibrierten Komponenten S_cal_(i,j) in einer Speicherkapazität des Detektors gespeichert sind.

**4.** Verfahren nach einem der Ansprüche 1 bis 3, wobei das Verfahren ferner die folgenden Schritte umfasst:

d) Berechnen eines Spaltenterms Col_mask_(j) für jede der Spalten (Cj), der dem Mittelwert der Messungen S_(i,j) der maskierten Bolometer Pix_mask_(i,j) der betrachteten Spalte entspricht;

e) Korrelieren zwischen den Spaltentermen Col_mask_(j) und kalibrierten Koordinaten C_mask cal_(j) der maskierten Bolometer (Pix_mask_(i,j)), die gemäß der folgenden Beziehung bestimmt werden:

$$C\_mask\_cal\_(j) = \frac{1}{n}\sum_{k=1}^{n} S\_mask\_ref\_(k,j) \; ;$$

f) zusätzliches Korrigieren des korrigierten Bilds, um ein endgültiges Bild zu erzeugen, wobei das zusätzliche Korrigieren das Berechnen der endgültigen Messungen S_fin_(i,j) des endgültigen Bilds anhand der korrigierten Messungen S_Cor_(i,j) und auf Basis des Ergebnisses des Schritts b) des Korrelierens umfasst.

5. Verfahren nach Anspruch 4, wobei der Schritt e) des Korrelierens eine lineare Regression umfasst, so dass die Spaltenterme Col_mask_(j) und die kalibrierten Koordinaten C_mask cal_(j) die folgende Beziehung erfüllen:

$$\text{Col \_mask\_(j)} = \alpha \cdot \text{C\_mask\_cal\_(j)} + \text{Col}_{offset}$$

wobei $\alpha$ und $\text{Col}_{offset}$ die während der linearen Regression bestimmten Terme sind.

6. Verfahren nach Anspruch 5, wobei der Schritt f) des zusätzlichen Korrigierens das Berechnen der endgültigen Messungen S_fin_(i,j) für jedes Bolometer (Pix_(i,j)) gemäß der folgenden Beziehung umfasst:

$$\text{S\_fin\_(i,j)} = \text{S\_Cor\_(i,j)} - \alpha \cdot \text{Col\_cal\_(j)} - \text{Col}_{offset}$$

wobei Col_cal_(i,j) für ein Bolometer (Pix_(i,j)) einer gegebenen Spalte (Cj) eine kalibrierte Koordinate ist, die gemäß der folgenden Beziehung bestimmt wird:

$$Col\_cal\_(j) = \frac{1}{n}\sum_{k=1}^{n} S\_ref\_(k,j).$$

7. Verfahren nach einem der Ansprüche 1 bis 6, wobei der Detektor mit einer auf einer Blende montierten Linse versehen ist, die maskierte Bolometer (Pix_mask_(i,j)) auf Höhe der Ecken des Detektors (1) verdeckt.

8. Verfahren nach einem der Ansprüche 1 bis 7, wobei der Detektor auch Blind-Bolometer (Bol_Blind_(j)) umfasst, wobei jedes Blind-Bolometer (Bol_Blind_(j)) zur Differenzmessung der Bolometer mindestens einer eigenen Spalte von Bolometern implementiert wird, wobei jedes Blind-Bolometer (Bol_Blind_(j)) vorzugsweise einer einzelnen Spalte (Cj) von Bolometern (Pix_(i,j)) zugeordnet ist.

9. Computerprogramm, das, wenn es von einem Computer ausgeführt wird, dazu führt, das Verfahren nach einem der Ansprüche 1 bis 7 zu implementieren.

10. Vorrichtung, die Folgendes umfasst:

- einen Detektor, der mit einer Vielzahl von Bolometern ausgestattet ist, die matrixförmig in n Zeilen ($L_i$) und m Spalten ($C_j$) angeordnet sind, wobei die Vielzahl von Bolometern der Umgebung gegenüber freiliegende Bolometer (Pix_exp_(i,j)) und maskierte Bolometer (Pix_mask_(i,j)) umfasst,
- einen Rechner, auf dem das Computerprogramm nach Anspruch 9 vorhanden ist.

11. Implementieren der Vorrichtung nach Anspruch 10 zur Detektion, insbesondere zur Detektion von Personen in einem Raum.

**Claims**

1. A method, executed by a calculator, for processing a raw image, **characterized by** raw measurements S_(i,j) collected by bolometers Pix_(i,j) of a detector (1) arranged in a matrix-like fashion according to n rows ($L_i$) and m columns ($C_j$), the bolometers Pix_(i,j) comprising exposed bolometers (Pix_exp_(i,j)), and masked bolometers (Pix_mask_(i,j)), veiled during the acquisition of the raw measurements, the method comprising:

a) calculating masked terms S_mask_norm_(i,j), associated with the masked bolometers (Pix_mask_(i,j)), the calculating consisting in subtracting a given column ($C_j$) from the raw measurement S_(i,j) of each masked bolometer (Pix_mask_(i,j)), the mean value of the raw measurements S_(i,j) of the masked bolometers of said column;

b) correlating between the masked terms S_mask_norm_(i,j) and calibrated components S_mask_cal_(i,j) of the masked bolometers (Pix_mask_(i,j)), determined according to the relationship:

$$S\_mask\_cal\_(i,j) = S\_mask\_ref\_(i,j) - \frac{1}{n}\sum_{k=1}^{n} S\_mask\_ref\_(k,j)$$

the terms S_mask_ref_(i,j) being reference measurements of the masked bolometers (Pix_mask_(i,j)) obtained at a reference temperature (Tr) and by masking the detector with a mask also maintained at the reference temperature (Tr), the correlation step comprising a linear regression so that each masked term S_mask_norm_(i,j) and the calibrated components S_mask cal_(i,j) comply with the following relationship:

$$S\_mask\_norm\_(i,j) = \beta . S\_mask\_cal\_(i,j) + D_{offset}$$

where $\beta$ and $D_{offset}$ are the terms determined during the linear regression;

c) a step of correcting the raw image which comprises the calculation of corrected measurements S_Cor_(i,j) of a corrected image for each bolometer (Pix_(i,j) on the basis of the result of the correlation step b), this correction step comprising the calculation of the corrected measurements S_Cor_(i,j) for each bolometer (Pix_(i,j)) according to the following relationship:

$$S\_Cor\_(i,j) = S\_(i,j) - \beta . S\_cal\_(i,j) - D_{offset}$$

where, for a given bolometer (Pix_(i,j)), S_cal_(i,j) is a calibrated component determined according to the relationship:

$$S\_cal\_(i,j) = S\_ref\_(i,j) - \frac{1}{n}\sum_{k=1}^{n} S\_ref\_(k,j)$$

the terms S_ref (i,j) being reference measurements of the bolometers (Pix_(i,j)) at a reference temperature (Tr) and by masking the detector with a mask also maintained at the reference temperature (Tr).

2. The method according to claim 1, wherein the detector comprises a memory space dedicated to saving the calibrated components S_mask cal_(i,j).

3. The method according to one of claims 1 or 2, wherein the calibrated components S_cal_(i,j) are saved in a memory space of the detector.

4. The method according to one of claims 1 to 3, wherein the method furthermore comprises the following steps:

   d) calculating, for each of the columns (Cj), a column term Col_mask_(j) corresponding to the mean value of the measurements S_(i,j) of the masked bolometers Pix_mask_(i,j) of the considered column;
   e) correlating between the column terms Col_mask_(j) and calibrated coordinates C_mask_cal_(j) of the masked bolometers (Pix_mask_(i,j)), determined according to the relationship:

$$C\_mask\_cal\_(j) = \frac{1}{n}\sum_{k=1}^{n} S\_mask\_ref\_(k,j);$$

   f) additionally correcting the corrected image to form a final image, the additional correction comprising the calculation of final measurements S_fin_(i,j) of the final image from the corrected measurements S_Cor_(i,j) and on the basis of the result of the correlation step e).

5. The method according to claim 4, wherein the correlation step e) comprises a linear regression so that the column terms Col_mask_(j) and the calibrated coordinates C_mask_cal_(j) comply with the following relationship:

$$Col\_mask\_(j) = \alpha . C\_mask\_cal\_(j) + Col_{offset}$$

where $\alpha$ and $Col_{offset}$ are the terms determined during the linear regression.

6. The method according to claim 5, wherein the additional correction step f) comprises the calculation of the final measurements S_fin_(i,j) for each bolometer (Pix_(i,j)) according to the following relationship:

$$S\_fin\_(i,j) = S\_Cor\_(i,j) - \alpha.Col\_cal\_(j) - Col_{offset}$$

where, for a bolometer (Pix_(i,j)) of a given column (Cj), Col_cal_(i,j) is a calibrated coordinate determined according to the relationship

$$Col\_cal\_(j) = \frac{1}{n}\sum_{k=1}^{n} S\_ref\_(k,j).$$

7. The method according to one of claims 1 to 6, wherein the detector is provided with a lens mounted on a diaphragm which veils masked bolometers (Pix_mask_(i,j)) at the corners of the detector (1).

8. The method according to one of claims 1 to 7, wherein the detector also comprises blind bolometers (Bol_Blind_(j)), each blind bolometer (Bol_Blind_(j)) being implemented for a differential measurement of the bolometers of at least one column of bolometers which is specific thereto, advantageously each blind bolometer (Bol_Blind_(j)) is associated with one single column ($C_j$) of bolometers (Pix_(i,j)).

9. A computer program which, when it is executed by a computer, causes the implementation of the method according to one of claims 1 to 7.

10. A device comprising:

   - a detector provided with a plurality of bolometers arranged in a matrix-like fashion according to n rows ($L_i$) and m columns ($C_j$), the plurality of bolometers comprising bolometers (Pix_exp_(i,j)) exposed to the scene, and veiled masked bolometers (Pix_mask_(i,j)),
   - a calculator fitted with the computer program according to claim 9.

11. An implementation of the device according to claim 10 for detection, in particular the detection of a person, in a room.

FIG.1

FIG.2

FIG.5

FIG.4

FIG.3

FIG.7

FIG.6

FIG.8

FIG.9b

FIG.9a

FIG.10

FIG.12

FIG.11

**RÉFÉRENCES CITÉES DANS LA DESCRIPTION**

**Documents brevets cités dans la description**

- US 20070120058 A
- WO 0184118 A
- EP 2940991 B1
- US 2010237245 A1